# EUROPEAN PATENT APPLICATION

(11) **EP 4 321 420 A1**
(43) Date of publication of application: **14.02.2024**
(21) Application number: 23156625.8
(22) Date of filing: 14.02.2023
(51) Int. Cl.: B62K 25/02, B60B 35/00

(54) **MOTOR SHAFT ANTI-ROTATION STRUCTURE AND MOTOR SHAFT SECURING METHOD**

(30) Priority: 12.08.2022 TW 111130506
(71) Applicant: Hyena Inc., Taichung City 408 (TW)
(72) Inventor: LIN, En-Jun, 408 Taichung City (TW)
(74) Representative: Chimini, Francesco

(57) **Abstract**

A motor shaft anti-rotation structure which is applied to secure a motor shaft to a carrier includes an anti-rotation sleeve and a screwing member. The anti-rotation sleeve includes a sleeve wall surrounding and defining an inner space, a pressing portion protruding radially and inward from the sleeve wall to separate the inner space into a motor shaft region and a screwing member region, a through hole penetrating the pressing portion and communicated with the motor shaft region and the screwing member region, and a restricting protrusion protruding outward from the sleeve wall and corresponding to an inserted hole of the carrier. The screwing member includes a threaded portion inserting in the through hole to screw into the motor shaft, and a head portion connected to the threaded portion and configured to press against the pressing portion. The head portion is configured to be received in the screwing member region.

## Description

### BACKGROUND

### Technical Field

The present disclosure relates to a motor shaft anti-rotation structure and a motor shaft securing method. More particularly, the present disclosure relates to a motor shaft anti-rotation structure and a motor shaft securing method of a hub motor.

### Description of Related Art

Generally, electric vehicles such as electric bicycles can employ motors to provide kinematic power, and the motors can be directly disposed at the front wheels or the rear wheels to directly drive the wheel axle.

As the motor is disposed at the front wheel or the rear wheel, the motor can be secured at the front fork or the back fork. A conventional securing structure includes an anti-rotation spacer, a washer, a nut and a cover. After the anti-rotation spacer surrounds the motor shaft, the motor can be set on the front fork or the rear fork, then the washer is set thereon, and the nut can be screwed thereto. Finally, the cover can cover the nut to complete the securing of the motor shaft. However, the structure of the conventional securing structure as well as the steps are complex, the assembling time thereof is long, and it is not easy to remove the conventional securing structure during repair. In addition, because the distance between the nut and the front fork or the rear fork is short, it does not facilitate for fastening the nut by wrench. Moreover, the cover is easy to be separated therefrom, and improvement is required.

### SUMMARY

According to one aspect of the present disclosure, a motor shaft anti-rotation structure which is applied to secure a motor shaft to a carrier is provided. The motor shaft anti-rotation structure consists of an anti-rotation sleeve and a screwing member. The anti-rotation sleeve includes a sleeve wall surrounding and defining an inner space, and a restricting protrusion protruding outward from the sleeve wall and corresponding to an inserted hole of the carrier. The screwing member is configured to insert in the through hole to screw into the motor shaft and to press against the anti-rotation sleeve.

According to one example of the motor shaft anti-rotation structure, the anti-rotation sleeve may further include a plurality of patterns disposed at an end surface of the sleeve wall that is connected to the restricting protrusion.

According to one example of the motor shaft anti-rotation structure, the sleeve wall may include two first inner surfaces and two second inner surfaces, each of the first inner surfaces is arc-shaped, each of the second inner surfaces is flat, and the first inner surfaces and the second inner surfaces are alternatively arranged.

According to one example of the motor shaft anti-rotation structure, the anti-rotation sleeve may further include a pressing portion protruding radially and inward from the sleeve wall to separate the inner space into a motor shaft region and a screwing member region, and a through hole penetrating the pressing portion and communicated with the motor shaft region and the screwing member region. The screwing member may include a threaded portion inserting in the through hole to screw into the motor shaft, and a head portion connected to the threaded portion and configured to press against the pressing portion. The head portion is configured to be received in the screwing member region.

According to another aspect of the present disclosure, a motor shaft securing method is provided. The motor shaft securing method includes a motor shaft inserting step, an anti-rotation sleeve setting step, and a screwing member fastening step. In the motor shaft inserting step, one of two ends of a motor shaft is inserted into one of two forks of a bicycle, and each of the forks includes an inserted hole. In the anti-rotation sleeve setting step, the anti-rotation sleeve of at least one motor shaft anti-rotation structure surrounds the one of the two ends of the motor shaft, the sleeve wall of the anti-rotation sleeve covers the one of the two ends of the motor shaft, and the restricting protrusion of the anti-rotation sleeve inserts the inserted hole of the fork. In the screwing member fastening step, the screwing member of the at least one motor shaft anti-rotation structure inserts the anti-rotation sleeve to screw into the motor shaft, and the screwing member presses the anti-rotation sleeve against the motor shaft.

According to one example of the motor shaft securing method, the two ends of the motor shaft may be respectively inserted into the two inserted holes of the two forks in the motor shaft inserting step.

According to one example of the motor shaft securing method, a number of the at least one motor shaft anti-rotation structure may be two, and the two anti-rotation sleeves are respectively put on the two ends of the motor shaft in the anti-rotation sleeve setting step.

According to one example of the motor shaft securing method, the two screwing members may be respectively passed through the two anti-rotation sleeves to screw into the two ends of the motor shaft in the screwing member fastening step.

### BRIEF DESCRIPTION OF THE DRAWINGS

The disclosure can be more fully understood by reading the following detailed description of the embodiments, with reference made to the accompanying drawings as follows:
Fig. 1 shows a combined schematic view of a motor shaft anti-rotation structure applied to a motor and two carriers according to a first embodiment of the present disclosure.
Fig. 2 shows an exploded schematic view of the motor shaft anti-rotation structure of Fig. 1 applied to the motor and the two carriers.
Fig. 3 shows a three-dimensional schematic view of an anti-rotation sleeve of the motor shaft anti-rotation structure of Fig. 1.
Fig. 4 shows a partial cross-sectional view of the motor shaft anti-rotation structure of Fig. 1 applied to the motor and the two carriers.
Fig. 5 shows a three-dimensional schematic view of a bicycle according to a second embodiment of the present disclosure.
Fig. 6 shows a block flow chart of a motor shaft securing method according to a third embodiment of the present disclosure.

### DETAILED DESCRIPTION

The embodiment will be described with the drawings. For clarity, some practical details will be described below. However, it should be noted that the present disclosure should not be limited by the practical details. That is, in some embodiments, the practical details are unnecessary. In addition, for simplifying the drawings, some conventional structures and elements will be simply illustrated, and repeated elements may be represented by the same reference numerals.

In addition, the terms first, second, third, etc. are used herein to describe various elements or components, these elements or components should not be limited by these terms, and therefore a first element/ component discussed below could be termed a second element/ component. Moreover, a combination of these elements/ components/ mechanisms/ modules of the present closure is not a known, common, or conventional combination in the art, and it cannot be predicted whether a relation of the combination thereof can be easily done by a person having skill in the art by these elements/ components/ mechanisms/ modules.

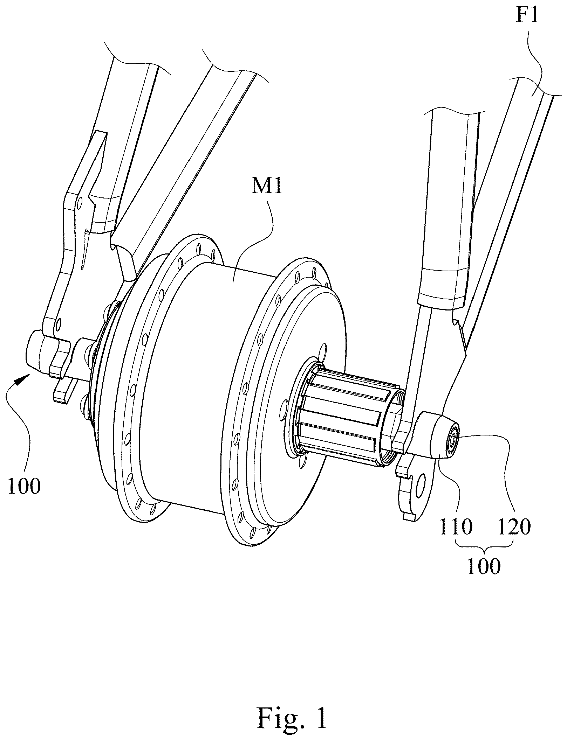

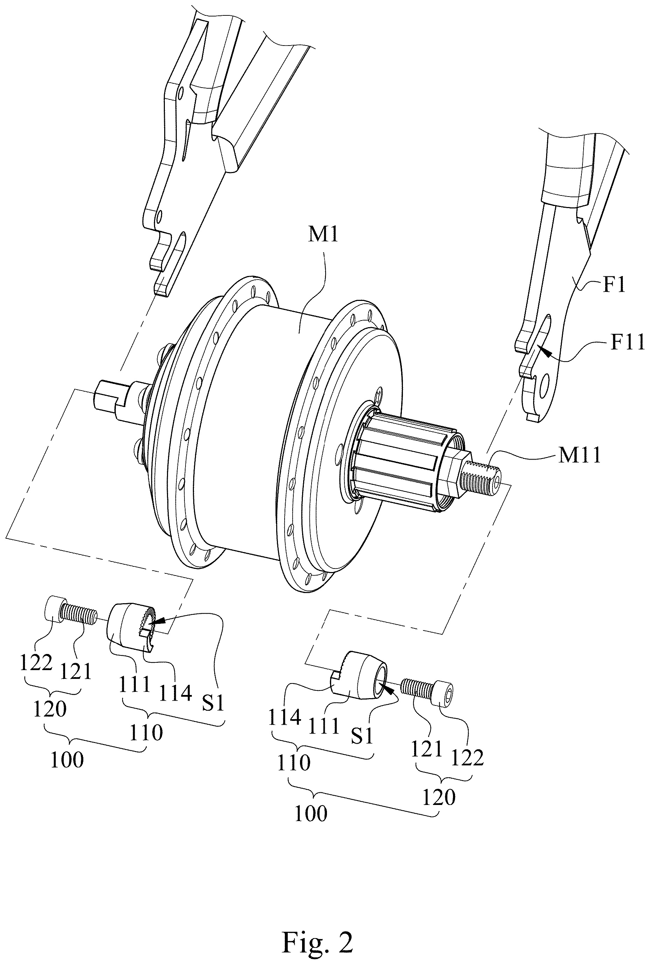

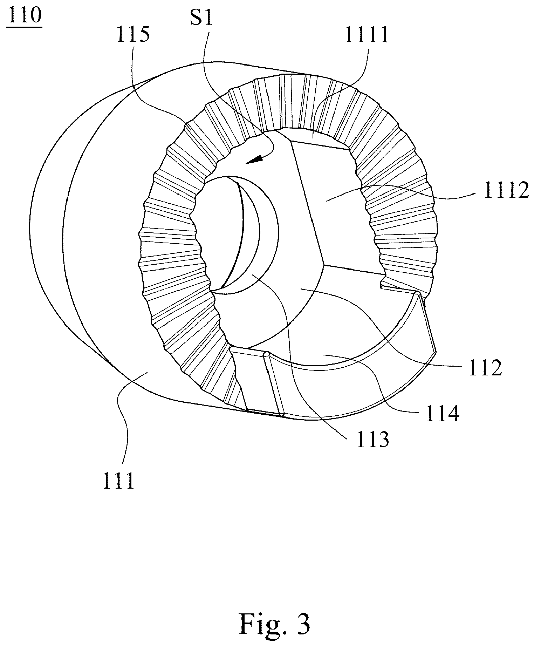

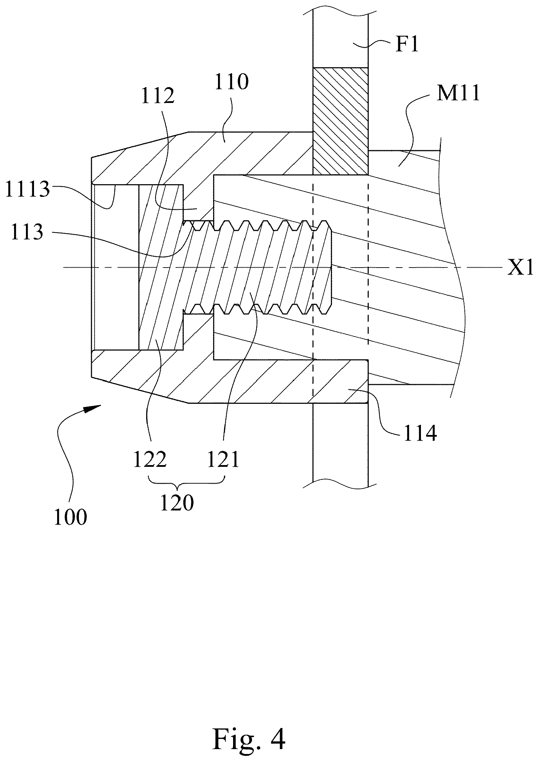

Fig. 1 shows a combined schematic view of a motor shaft anti-rotation structure 100 applied to a motor M1 and two carriers F1 according to a first embodiment of the present disclosure. Fig. 2 shows an exploded schematic view of the motor shaft anti-rotation structure 100 of Fig. 1 applied to the motor M1 and the two carriers F1. A motor shaft anti-rotation structure 100 is applied to secure a motor shaft M11 to a carrier F1. The motor shaft anti-rotation structure 100 includes an anti-rotation sleeve 110 and a screwing member 120. The anti-rotation sleeve 110 includes a sleeve wall 111 surrounding and defining an inner space S1, a pressing portion 112 (shown in Fig. 3) protruding radially and inward from the sleeve wall 111 to separate the inner space S1 into a motor shaft region and a screwing member region, a through hole 113 (shown in Fig. 3) penetrating the pressing portion 112 and communicated with the motor shaft region and the screwing member region, and a restricting protrusion 114 protruding outward along an axis X1 (shown in Fig. 4) from the sleeve wall 111 and corresponding to an inserted hole F11 of the carrier F1. The screwing member 120 includes a threaded portion 121 inserting in the through hole 113 to screw into the motor shaft M11, and a head portion 122 connected to the threaded portion 121 and configured to press against the pressing portion 112. The head portion 122 is configured to be received in the screwing member region.

Therefore, with the anti-rotation sleeve 110, the motor shaft M11 can be protected, and the restricting protrusion 114 of the anti-rotation sleeve 110 can be coordinated with the inserted hole F11 to achieve an anti-rotation effect. Moreover, with the screwing member 120 inserting the anti-rotation sleeve 110 and screwing into the motor shaft M11, it is favorable for securing the motor shaft M11 to the carrier F1 quickly and conveniently, thereby simplifying the structure and increasing the convenience. Details of the motor shaft anti-rotation structure 100 will be described hereinafter.

In the first embodiment, the carriers F1 are illustrated as rear forks of a bicycle, but the present disclosure is not limited thereto. A number of the carriers F1 is two, and the motor M1 is positioned between the two carriers F1. Two ends of the motor shaft M11 can be respectively restricted and supported by the two carriers F1, and the motor shaft M11 includes two screwing holes respectively located at the two ends. Each of the carriers F1 can include the inserted hole F11, and the inserted hole F11 can be U-shaped and is configured for each end of the motor shaft M11 to insert therein and for the restricting protrusion 114 to protrude therein. In other embodiments, the formation of the carrier and the inserted hole thereof can be configured according to the demands, and the present disclosure is not limited thereto.

Fig. 3 shows a three-dimensional schematic view of an anti-rotation sleeve 110 of the motor shaft anti-rotation structure 100 of Fig. 1. Fig. 4 shows a partial cross-sectional view of the motor shaft anti-rotation structure 100 of Fig. 1 applied to the motor M1 and the two carriers F1. As shown in Figs. 1 to 4, the sleeve wall 111 of the anti-rotation sleeve 110 can be substantially separated into a first section and a second section. The first section is near the restricting protrusion 114 and the outer surface thereof is cylinder-shaped and has a uniform outer diameter. The sleeve wall 111 can include two first inner surfaces 1111 and two second inner surfaces 1112 located at the first section, that is, extending from an inner edge of the pressing portion 112 toward an end surface of the sleeve wall 111. Each of the first inner surfaces 1111 is arc-shaped, and each of the second inner surfaces 1112 is flat. The first inner surfaces 1111 and the second inner surfaces 1112 are alternatively arranged, and each end of the motor shaft M11 of the motor M1 fits the shapes of the first inner surfaces 1111 and the second inner surfaces 1112 of the sleeve wall 111, thereby ensuring the motor shaft M11 and the anti-rotation sleeve 110 to be rotatably linked. The second section is integrally connected to the first section, and an outer surface of the second section is cone-shaped. The sleeve wall 111 can further include a third inner surface 1113 located at the second section, that is, extending from an outer edge of the pressing portion 112 toward the other end surface of the sleeve wall 111. The third inner surface 1113 is cylinder-shaped.

As shown in Fig. 3, the anti-rotation sleeve 110 can further include a plurality of patterns 115 disposed at the end surface of the sleeve wall 111 that is connected to the restricting protrusion 114, that is, the end surface near the first section. The patterns 115 can be notch-shaped and arranged radially on the end surface, but the present disclosure is not limited thereto. Hence, as the restricting protrusion 114 inserts the inserted hole F11, the patterns 115 are favorable for increasing the friction between the end surface of the anti-rotation sleeve 110 and the surface of the carrier F1, thereby increasing the fastening stability of the structures.

As shown in Fig. 4, the motor shaft anti-rotation structure 100 can consist of the anti-rotation sleeve 110 and the screwing member 120. Consequently, as securing the motor shaft M11, the motor shaft M11 can be inserted into the inserted hole F11 of the carrier F1, and then the anti-rotation sleeve 110 can be put on the motor shaft M11 with the restricting protrusion 114 correspondingly inserting the inserted hole F11. After which, the screwing member 120 can be inserted into the through hole 113 to screw into the screwing hole of the motor shaft M11, thereby allowing the head portion 122 of the screwing member 120 to press against the pressing portion 112 to restrict the motor shaft anti-rotation structure 100 to the carrier F1 and the motor shaft M11, and completing the securing of the motor shaft M11. Under such structure, the head portion 122 of the screwing member 120 can also be protected by the screwing member region of the sleeve wall 111. Based on the above, it is known that not only the structure of anti-rotation sleeve of the present disclosure is simplified, but also the operating steps are very convenient.

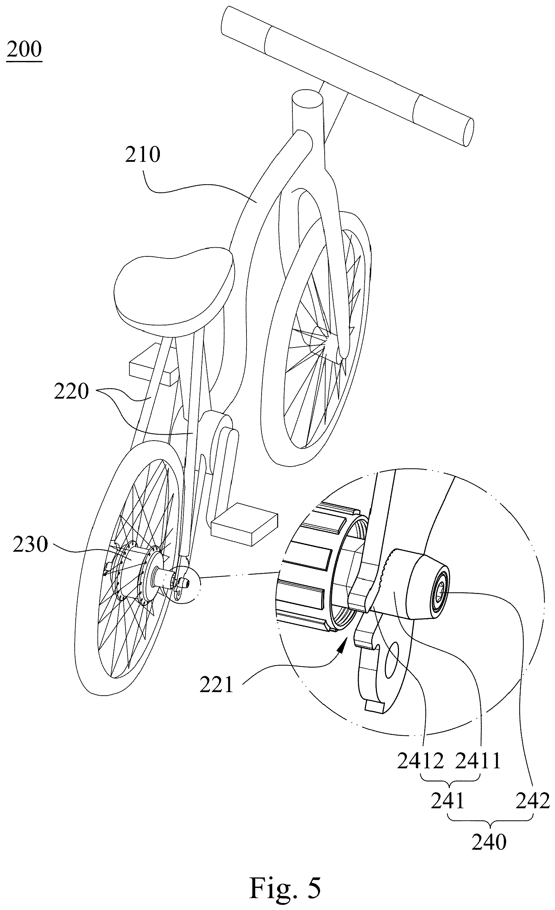

Fig. 5 shows a three-dimensional schematic view of a bicycle 200 according to a second embodiment of the present disclosure. A bicycle 200 includes a main frame 210, two forks 220 connected to the main frame 210, a motor 230 positioned between the two forks 220 and including a motor shaft (not labeled in the second embodiment), and two motor shaft anti-rotation structures 240. Each of the forks 220 includes an inserted hole 221. Two ends of the motor shaft are respectively disposed at the two inserted holes 221, and the motor shaft includes two screwing holes respectively located at the two ends. Each of the motor shaft anti-rotation structures 240 consists of an anti-rotation sleeve 241 and a screwing member 242. Each of the anti-rotation sleeves 241 includes a sleeve wall 2411 and a restricting protrusion 2412, each of the sleeve walls 2411 surrounds and defines an inner space (not shown in the second embodiment), and each of the restricting protrusions 2412 protrudes outward from each of the sleeve walls 2411 along an axis (not labeled in the second embodiment). Each of the anti-rotation sleeves 241 surrounds each of the two ends, and each of the restricting protrusions 2412 protrudes into each of the inserted holes 221. Each of the screwing members 242 is configured to insert in each of the inner spaces to screw into each of the screwing holes, and each of the screwing members 242 presses against each of the anti-rotation sleeves 241 to secure the motor 230 between the two forks 220.

The structure of the motor shaft anti-rotation structure 240 can be similar to the structure of the motor shaft anti-rotation structure 100 of the first embodiment. Therefore, the sleeve wall 2411 of at least one of the anti-rotation sleeve 241 can also include two first inner surfaces (not shown in the second embodiment) and two second inner surfaces (not shown in the second embodiment), and each of the first inner surfaces is arc-shaped, each of the second inner surfaces is flat. The first inner surfaces and the second inner surfaces are alternatively arranged, and at least one of the ends fits a shape of the sleeve wall 2411. In other embodiments, the two ends of the motor shaft can fit tightly with the inner surfaces of the two sleeve walls, respectively, or the two ends of the motor shaft can be rotatably linked with the sleeve walls without fitting tightly with the inner surfaces of the two sleeve walls. The structure can be configured based on demands, and the present disclosure is not limited thereto.

Additionally, although the motor 230 and the motor shaft anti-rotation structure 240 in Fig. 5 are secured to the fork 220 illustrated as a rear fork, but in other embodiments, the fork can be a front fork. Moreover, as the motor is employed as a hub motor for the rear wheel, a transmission gear set can be further set for engaging with a chain, but the present disclosure is not limited thereto.

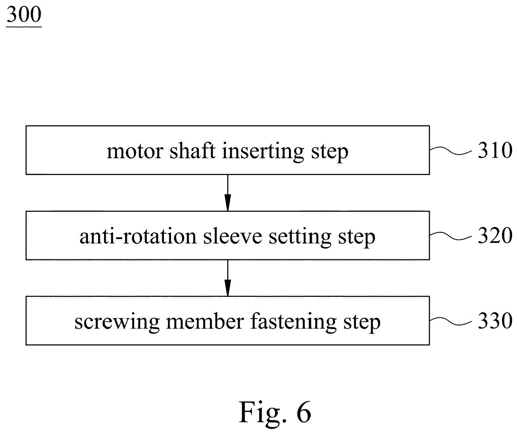

Fig. 6 shows a block flow chart of a motor shaft securing method 300 according to a third embodiment of the present disclosure. A motor shaft securing method 300 includes a motor shaft inserting step 310, an anti-rotation sleeve setting step 320, and a screwing member fastening step 330. Details of the motor shaft securing method 300 will be described with the bicycle 200 in Fig. 5 hereinafter.

In the motor shaft inserting step 310, one of two ends of a motor shaft is inserted into a fork 220 of a bicycle 200.

In the anti-rotation sleeve setting step 320, the anti-rotation sleeve 241 of at least one motor shaft anti-rotation structure 240 surrounds the one of the two ends of the motor shaft, the sleeve wall 2411 of the anti-rotation sleeve 241 covers the one of the two ends of the motor shaft, and the restricting protrusion 2412 of the anti-rotation sleeve 241 inserts the inserted hole 221 of the fork 220.

In the screwing member fastening step 330, the screwing member 242 of the at least one motor shaft anti-rotation structure 240 inserts the anti-rotation sleeve 241 to screw into the motor shaft, and the screwing member 242 presses the anti-rotation sleeve 241 against the motor shaft.

In the third embodiment, a number of the at least one motor shaft anti-rotation structure 240 is two, the two ends of the motor shaft can be respectively inserted into the two inserted holes 221 of the two forks 220 in the motor shaft inserting step 310, after which the two anti-rotation sleeves 241 can be respectively put on the two ends of the motor shaft in the anti-rotation sleeve setting step 320, and finally the two screwing members 242 can be respectively passed through the two anti-rotation sleeves 241 to screw into the two ends of the motor shaft in the screwing member fastening step 330. In other embodiments, the motor shaft inserting step, the anti-rotation sleeve setting step and the screwing member fastening step can be sequentially operated once to allow one of the two motor shaft anti-rotation structures to secure one of the two ends of the motor shaft to one of the forks, and then the motor shaft inserting step, the anti-rotation sleeve setting step and the screwing member fastening step can be operated again to allow the other one of the two motor shaft anti-rotation structures to secure the other one of the two ends of the motor shaft to the other one of the forks. Alternatively, the two ends of the motor shaft can be respectively inserted into the two inserted holes of the two forks in the motor shaft inserting step, after which the anti-rotation sleeve setting step and the screwing member fastening step can be sequentially operated twice to respectively secure two motor shaft anti-rotation structures to the two ends of the motor shaft, but the present disclosure is not limited thereto.

Based on the aforementioned embodiments, the motor shaft anti-rotation structure includes fewer components, and therefore the cost can be reduced and the assembly strength can be increased. Moreover, the assembly time as well as the inconvenience can be reduced, and the ease of assembly and detaching the motor shaft is increased. Furthermore, the anti-rotation sleeve can cover each end of the motor shaft, and the protection effect for protecting the motor shaft is improved.

## Claims

1. A motor shaft anti-rotation structure (100, 240), which is applied to secure a motor shaft (M11) to a carrier (F1), the motor shaft anti-rotation structure (100, 240) **characterized in** consisting of an anti-rotation sleeve (110, 241) and a screwing member (120, 242), wherein:
the anti-rotation sleeve (110, 241) comprises:
a sleeve wall (111, 2411) surrounding and defining an inner space (S1); and
a restricting protrusion (114, 2412) protruding outward from the sleeve wall (111, 2411) and corresponding to an inserted hole (F11, 221) of the carrier (F1); and
the screwing member (120, 242) is configured to insert in the through hole (113) to screw into the motor shaft (M11) and to press against the anti-rotation sleeve (110, 241).

2. The motor shaft anti-rotation structure (100, 240) of claim 1, wherein the anti-rotation sleeve (110, 241) further comprises:
a plurality of patterns (115) disposed at an end surface of the sleeve wall (111, 2411) that is connected to the restricting protrusion (114, 2412).

3. The motor shaft anti-rotation structure (100, 240) of any of claims 1 to 2, wherein the sleeve wall (111, 2411) comprises two first inner surfaces (1111) and two second inner surfaces (1112), each of the first inner surfaces (1111) is arc-shaped, each of the second inner surfaces (1112) is flat, and the first inner surfaces (1111) and the second inner surfaces (1112) are alternatively arranged.

4. The motor shaft anti-rotation structure (100, 240) of any of claims 1 to 3, wherein:
the anti-rotation sleeve (110, 241) further comprises:
a pressing portion (112) protruding radially and inward from the sleeve wall (111, 2411) to separate the inner space (S1) into a motor shaft region and a screwing member region; and
a through hole (113) penetrating the pressing portion (112) and communicated with the motor shaft region and the screwing member region; and
the screwing member (120, 242) comprises:
a threaded portion (121) inserting in the through hole (113) to screw into the motor shaft (M11); and
a head portion (122) connected to the threaded portion (121) and configured to press against the pressing portion (112), the head portion (122) being configured to be received in the screwing member region.

5. A motor shaft securing method (300), **characterized in** comprising:
a motor shaft inserting step (310), wherein one of two ends of a motor shaft (M11) is inserted into one of two forks (220) of a bicycle (200), and each of the forks (220) comprises an inserted hole (F11, 221);
an anti-rotation sleeve setting step (320), wherein the anti-rotation sleeve (110, 241) of at least one motor shaft anti-rotation structure (100, 240) of any of claims 1 to 4 surrounds the one of the two ends of the motor shaft (M11), the sleeve wall (111, 2411) of the anti-rotation sleeve (110, 241) covers the one of the two ends of the motor shaft (M11), and the restricting protrusion (114, 2412) of the anti-rotation sleeve (110, 241) inserts the inserted hole (F11, 221) of the fork (220); and
a screwing member fastening step (330), wherein the screwing member (120, 242) of the at least one motor shaft anti-rotation structure (100, 240) inserts the anti-rotation sleeve (110, 241) to screw into the motor shaft (M11), and the screwing member (120, 242) presses the anti-rotation sleeve (110, 241) against the motor shaft (M11).

6. The motor shaft securing method (300) of claim 5, wherein the two ends of the motor shaft (M11) are respectively inserted into the two inserted holes (F11, 221) of the two forks (220) in the motor shaft inserting step (310).

7. The motor shaft securing method (300) of any of claims 5 to 6, wherein a number of the at least one motor shaft anti-rotation structure (100, 240) is two, and the two anti-rotation sleeves (110, 241) are respectively put on the two ends of the motor shaft (M11) in the anti-rotation sleeve setting step (320).

8. The motor shaft securing method (300) of any of claims 5 to 7, wherein the two screwing members (120, 242) are respectively passed through the two anti-rotation sleeves (110, 241) to screw into the two ends of the motor shaft (M11) in the screwing member fastening step (330).
